(19) Europäisches Patentamt
European Patent Office
Office européen des brevets

(11) **EP 2 169 688 A1**

(12) **EUROPEAN PATENT APPLICATION**
published in accordance with Art. 153(4) EPC

(43) Date of publication:
**31.03.2010 Bulletin 2010/13**

(51) Int Cl.:
**H01B 12/06** [(2006.01)]

(21) Application number: **08794049.0**

(22) Date of filing: **03.07.2008**

(86) International application number:
**PCT/RU2008/000431**

(87) International publication number:
**WO 2009/008772 (15.01.2009 Gazette 2009/03)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **10.07.2007 RU 2007126084**

(71) Applicant: **Tsoi, Bronya**
**Moscow, 117342 (RU)**

(72) Inventors:
• **SHEVELEV, Valentin Vladimirovich**
**Moscow 117321 (RU)**
• **TSOI, Tatyana Sergeevna**
**Moscow 117418 (RU)**

(74) Representative: **Lemcke, Brommer & Partner**
**Patentanwälte**
**Bismarckstraße 16**
**76133 Karlsruhe (DE)**

(54) **ELECTRIC CURRENT CONDUCTOR AND METHOD FOR THE PRODUCTION THEREOF**

(57) The invention relates to electric conductors, in particular to those having low and ultralow resistance values within an extended range of operational temperatures, i.e. superconductors. According to a first aspect of the invention, a method for the production of an electric conductor is provided, said method comprising performing M series of measurements of the electrical resistance of the current-conducting elements, wherein M is a natural number, said current-conducting elements in each i-nth series (i=I..M) belong to a single type and their number is equal to $N_i$, taking the j-nth sample of Nj single-type elements based on the measurement results, wherein said sample is defined by the least resistance value among all elements tested, and then connecting in parallel R>Nj of the current-conducting elements each having a length of $L<l_j$ where $l_j$ is a length of the elements in the j-nth sample. According to second aspect of the invention, an electric conductor is provided which comprises R single-type current-conducting elements of the length L connected in parallel, wherein R>Nj and Nj is the number of elements in the j-nth sample taken based on the results of performing M series of measurements of the electrical resistance of the current-conducting elements, M is a natural number, said current-conducting elements in each i-nth series (i=I..M) belong to a single type, said j-nth series is taken based on the presence therein of a current-conducting element with the least resistance, and $L<l_j$, where $l_j$ is the length of the elements in the j-nth sample. Accordingly, production of the electric conductors with low- and ultralow resistance values is disclosed.

EP 2 169 688 A1

Printed by Jouve, 75001 PARIS (FR)

**Description**

Technical Field

The invention relates to electric conductors, in particular to those having low and ultralow resistance values within an extended range of operational temperatures, i.e. superconductors.

Background Art

At present, classic electric conductors are widely known made of such chemical elements as copper, gold, silver, platinum, magnesium, aluminium, ferrum etc.
Such conductors are operable under normal high-temperature conditions (at 273 K and higher), however, their essential drawback consists in a high resistance to the passage of electrical current, in particular the resistivity level of classic conductors is from $1.55 \cdot 10^{-6}$ to $1.12 \cdot 10^{-6}$ $\Omega$-m (at 293 K). High values of resistance, wide spread and instability of values between specimens in actual practice are responsible for considerable electric power losses in circuits using said classic conductors.

In order to reduce and stabilize the resistance, superconducting materials may be for instance used, featuring stepwise abnormal drop, stabilization and elimination of the spread in resistance values essentially to zero under certain conditions.

Accordingly, since the time when the superconductivity effect of mercury at ultralow temperatures was discovered in 1911 by H. Kamerlingh Onnes and so far, this phenomenon has been many times recorded experimentally and based theoretically, and also substantially for materials cooled to ultralow temperatures from 0 to 77 K [Ginsburg V.L. /Superconductivity: the Day before Yesterday, Yesterday, Today, and Tomorrow //Advances in Physical Science, 2000, Volume 170, No. 6, pages 619-630; Yugai K.N. /Interaction between High-Power Pulsed Laser Radiation and the Surface of Ceramic YBCO Target //Encyclopedia of Koreans of Russia, Moscow, Russian Academy of Sciences, 2003, pages 535-541]. Low-temperature conditions of these phenomena prevent from using the same under normal high-temperature conditions, for example, at 293 K and higher.

Since that time, the main efforts to attain superconductivity have been focused on varying the experimental temperature. Having failed to discover this phenomenon in a number of classic conducting materials, for example, copper, silver, gold, platinum, etc., researchers focused their efforts on modifying the chemical structure and creating of new materials which provide the effect of reducing the resistance to zero under high-temperature conditions. Overwhelmingly, no superconducting state under high-temperature conditions at the temperature of T>273 K or at least stable reproduction of the superconductivity effect have been achieved by the researchers in the past century. [Ginsburg V.L. /Superconductivity: the Day before Yesterday, Yesterday, Today, and Tomorrow. //Advances in Physical Science. 2000, Volume 170, No. 6, pages 619-630].

As used herein, the term "superconductor" applies to conductors with essentially zero value of electrical resistance while the conduction, i.e. the reciprocal value of resistance has an infinitely large value. In the absence of magnetic filed inside the conductor, it is referred to as a second-kind superconductor.

As used hereinafter, the term "ultralow resistance", conventionally applies to the values of resistance fairly close to zero, the resistance being at least several orders of magnitude lower that that of the classic conductors.

Ultralow values of electrical resistance, along with the zero value may be equally well used in the state-of-the-art technology, industry and electronics.

From the patent literature, superconducting materials are known made from films based on $CuO_{1-x}$ [Azzoni C.B., Paravicini G.B., Samoggia G, et al., Electrical Instability in CuO1-x: Possible Correlations with the CuO-based High Temperature Superconductors.//Z. Naturforsch. 1990. Volume 45a, pages 790-794] and Y-Ba-Cu-O [Schonberger R., Otto H.H., Brunner B., Renk K.F., Evidence for Filamentary Superconductivity up to 220 K in Oriented Multiphase Y-Ba-CuO Films //Phisica C 1991. V. 173. P. 159-162], enriched with copper, with a stepwise abnormal drop of electrical resistance to zero (or superconductivity) being observed within the temperature range of 180-220 K.

The drawback of these conductors consists in instability of electrical resistance over time, non-reproductivity from specimen to specimen as well as disappearance of the effect after a number of temperature measurement cycles within the temperature range under study (so called "irreproducible superconductivity", "stray superconductivity").

Also, known is a superconducting material made of copper films with a thickness of 0.4 $\mu$m applied by thermal evaporation on natural faces of CuO crystal as a substrate [Ossipov V.V., Samokhvalov A.A. /Giant Electroconductivity Anomalies at CuO-Cu Interface. // Physics of Metals and Metal Science, 2000, Volume 89, No. 5, pages 43-46]. A wide experimental spread was observed in such conductor within the temperature range of from 73 K to 420 K: the electrical resistivity value of some specimens was two and more orders of magnitude lower varying from the normal value of $1.55 \cdot 10^{-6}$ $\Omega$-m to $7.8 \cdot 10^{-11}$ $\Omega$-m. Moreover, after electrothermal annealing of this material at 300-400°C and higher, a drastically abnormal drop of resistance from several to 150,000 times was recorded in some specimens (due to emergence of additional ultralow conductivity zones or clusters at CuO-Cu interface). Therefore, along with a drastic drop of resistance in such conducting material [Ossipov V.V., Samokhvalov A.A. /Giant Electroconductivity Anomalies at CuO-Cu Interface. //Physics of Metals and Metal Science, 2000, Volume 89, No. 5, pages 43-46], enormous experimental spread and instability of resistance values was observed varying from normal values for certain specimens of copper (with the resistivity of $1.55 \cdot 10^{-8}$ $\Omega$-m) to essentially zero value for other specimens. The enormous experimental spread in resistance values of the material specimens proposed in [Ossipov V.V., Samokhvalov A.A. /Giant Electroconductivity Anomalies at CuO-Cu Interface. //Physics of Metals and Metal Science, 2000, Volume 89, No. 5, pages 43-46] is indicative of stochasticity and "stray" type of the observed effect. The disadvantage of such kind of conductors consists in enormous spread and stochasticity, and as consequence the "stray" type of the zero resistance which prevented from using the same in the prior art.

Known are so called litzendrahts [Comprehensive Polytechnical Encyclopedic Dictionary, Moscow, Bolshaya Rossiyskaya Entsiklopedia Publishers, 1998, pages 204-205], comprising twisted isolated and bunched N conductors which are soldered to form a parallel circuit with two opposing current electrodes. Litzendrahts have a relatively low resistivity and are used for fighting eddy currents. However, despite a large N number of strand elements and parallel current circuit, litzendrahts do not provide resistance values sufficiently close or equal to zero.

The prior art closest to the claimed invention is a multilayer material on a substrate comprising a combination of layers, which combination forms a charge integrator providing a superconducting zone with $CuO_2$ and a number of superimposed monomolecular film layers of a material selected from the group consisting of bismuth (Bi), mercury (Hg), thallium (Tl) and copper (Cu), said charge integrator and superconducting zone abutting on each other within a compact layer assembly, **characterized in that** the number of layers is an integer not less than 4, and the interlining material layers have the chemical formula $Ca_{1-x}M_x$, etc. [RU 2 131 157, 25 C1, 27.05.1999]. The drawback of this multilayer material consists first of all in its structural and manufacturing complexity, relatively low critical temperature value being of 250 K. In other words, in order to take on the superconductivity property, the material should be cooled down to 250 K which requires high operating costs, involves technical difficulties and narrows the application field of such material. Furthermore, due to the complex structure of such material, high-technology expensive equipment which gained no acceptance in the industry is required for producing the same making the cost of such material considerably higher along with impairing its manufacturability.

Disclosure of the Invention

It is an object of the present invention to provide conductors having a low and ultralow resistance value within a wide temperature range from ultralow temperatures of up to 420 K and higher, and characterized by an improved manufacturability compared to the prior art solutions.

According to a first aspect of the invention said object is achieved by a method for the production of an electric conductor, said method comprising performing M series of measurements of the electrical resistance of the current-conducting elements, wherein M is a natural number, said current-conducting elements in each i-nth series (i=1..M) belong to a single type and their number is equal to $N_I$, taking the j-nth sample of Nj single-type elements based on the measurement results, wherein said sample is defined by the least resistance value among all elements tested, and then connecting in parallel R>Nj of the current-conducting elements each having a length of $L<l_j$ where $l_j$ is a length of the elements in the j-nth sample.

Preferably, the current-conducting elements comprise films or fibers of a current-conducting material.

Preferably, the value of $N_i$ for each i=1..M is not less than 100.

According to second aspect of the invention said object is also achieved by providing an electric conductor which comprises R single-type current-conducting elements of the length L connected in parallel, wherein R>Nj and Nj is the number of elements in the j-nth sample taken based on the results of performing M series of measurements of the electrical resistance of the current-conducting elements, M is a natural number, said current-conducting elements in each i-nth series (i=1..M) belong to a single type, said j-nth series is taken based on the presence therein of a current-conducting element with the least resistance, and $L<l_j$, where $l_j$ is the length of the elements in the j-nth sample.

Preferably, the current-conducting elements comprise films or fibers of a current-conducting material.

Preferably, the value of Ni for each i=1..M is not less than 100.

The object and the effect of the present invention are achieved based on the use of the principle of temperature-time, scale and power equivalency (further referred to as the TTE principle) in combination with statistical methods first established and developed by the inventors.

The TTE principle consists in that the exposure of a specimen to a temperature, rescaling, power (current) load or frequency (or being the same, to a dwell time) results in equivalent changes of the specimen structure-sensitive physical characteristics. According to the TTE principle it makes no difference whether a specimen (conductor in this case) is exposed to a temperature, load, frequency or change of its scale. When a specimen is exposed to said factors separately or alternately, the same equivalent result is obtained so that the researcher may obtain identical information about the specimen structure and properties. Accordingly, zero and ultralow resistance may be obtained by exposure (changing) not only to a temperature but also by changing the scale, current load or frequency acting on the conductor (so long as a certain parameter, for example, temperature is constant, i.e. T=const).

Abundant evidence from the patent literature summarized in [Ginsburg V.L. /Superconductivity: the Day before Yesterday, Yesterday, Today, and Tomorrow. //Advances in Physical Science 2000, Volume 170, No. 6, pages 619-630] and also proved by our experiments made it possible to establish with all certainty that "stray" high-temperature superconducting zones (or clusters) further referred herein as SCZ are produced or formed by some means or other in non-superconducting materials (conductors). As a rule, SCZs comprise oxides or protoxides of various chemical elements of which the conductor material is made. In particular, local areas with SCZs chaotically and statistically at random positioned therein have been found in the prior art conductors made of various materials, for example, cuprates. At the same time, regularities of their behaviour have been unclear so far. [Ginsburg V.L. / Superconductivity: the Day before Yesterday, Yesterday, Today, and Tomorrow. //Advances in Physical Science. 2000, Volume 170, No. 6, pages 619-630, Azzoni CB., Paravicini G.B., Samoggia G, et al. Electrical Instability in CuOI-x: Possible Correlations with the CuO-based High Temperature Superconductors.//Z. Naturforsch. 1990. Volume 45a, pages 790-794. Schonberger R., Otto H.H., Brunner B., Renk K.F. Evidence for Filamentary Superconductivity up to 220 K in Oriented Multiphase Y-Ba-CuO Films// Phisica C 1991. Volume 173, pages 159-162, Ossipov V.V., Samokhvalov A.A. /Giant Electroconductivity Anomalies at CuO-Cu Interface. // Physics of Metals and Metal Science. 2000, Volume 89, No. 5, pages 43-46].

It is this statistically random positioning of SCZs that resulted in the manifestation of the "stray" or "irreproducible" superconductivity effect. No methods of finding and eliminating the "stray" effects are known in the art.

According to the claimed invention conventional classic conductors, for example, made of copper, aluminium or silver or other non-superconducting materials including semiconductors with n and p conduction are used for achieving the technical effect. Since the lateral dimensions of SCZs are not clear and SCZs are randomly located at the conductor surface or within the conductor volume, they can be only found and measured by statistical methods. Therefore, the problem reduces to finding statistically and determining the lateral dimensions of SCZs for each particular conductor. To this end, variational series of the measured resistance values according to n sequence numbers in increasing order of specimen numbers (1, 2, 3, ... n) are defined based on statistical samples (or series) consisting of the measurement data of Ni single-type (identical) conductor specimens in each series (i, Ni are natural numbers). In practice, in order to obtain guaranteed and reproducible results the number of Ni should not be less that 100. Variational diagrams or series, or distribution curves are plotted for various geometric dimensions of the specimens, in other words, the relationship is considered between the electrical resistance values in each series (sample) and the scale factor of the conductor specimens. The series or sample comprising at least one specimen with the resistance value equal or close to zero is detected on the variational diagrams or distribution functions corresponding, for example, to various lengths.

It is the thus determined specimen scale providing for detection of least one zero-resistance specimen in the j-nth statistical sample (series) of Nj current-conducting elements that will correspond to the SCZ or cluster lateral dimension. Then, the j-nth series (sample) comprising an SCZ and having zero resistance value providing for detection of this specimen, or a set of R current-conducting elements of the same type as specimens of the j-nth series (i.e., having the same dimensions - length, width, thickness, made of the same material and by the same method), where R>Nj, is stacked or bunched into a parallel electric circuit with two opposing current electrodes. If the resistance of at least one element in such statistical bunch is equal or close to zero, the entire multiple-element bunch will be superconducting.

It appeared in practice that for copper and silver wire the statistically determined lateral dimension of SCZ is less than 4000 $\mu$m. The entire statistical sample comprising the zero-resistance specimen is stacked (for film-based specimens) or bunched (for wire-based specimens) with two opposing current electrodes being attached to the ends of stacks or bunches.

In the experiments carried out by the inventors, wherein the specimen scale was reduced to the lateral dimension of the superconducting zone (SCZ), the zones themselves were included in the common parallel circuit as a circuit element between the two opposing current electrodes to become the intrinsic structural-statistical electrical characteristic of the specimen. Since the superconducting zones are of stochastic nature, they can only be detected statistically. Therefore, the inventors have studied the experimental statistical functions of electrical resistance distribution based on the data of at least 100 identical (single-type) tested specimens in each series (sample). Dealing with stochastic values, embodiments of the superconductor are possible, wherein a SCZ may also appear in a sample with N<100.

Therefore, each tested specimen series or sample comprising single-type and separate conductor specimens differs from each other in the linear dimensions of the specimens and, in a general case, may also differ in the number of current-conducting elements in the sample. The thickness of the wire specimens used by the inventors in the experiments varied from 2000 $\mu$m to 50 $\mu$m and less, and that of the film specimens - from 200 $\mu$m to 0.3 $\mu$m. At the same time, as already noted, at least 100 specimens have to be measured to obtain guaranteed, reliable and reproducible measurements of resistance R and inductance L. With N<100, the reproductivity, reliability and fidelity decrease, and the probability becomes less that 1, i.e., there is no 100% guarantee of obtaining the electric conductor with low and ultralow resistance values or zero resistance value (i.e. superconductor). In actual practice, conductors with the resistance close to or differing from zero, for example, one or two orders of magnitude may be required rather than non-zero resistance conductors, which is the case of various electronic circuits and equipment.

As shown by the experiments carried out, if the effective length, for example, of the copper specimens in a series of at least 100 tested specimens is reduced to less that 4000 $\mu$m, enormous experimental spread is detected. A number of resistance values close to zero are present in such series or sample of specimens, at least one or more conductors among them having zero resistance values, R=0 and zero inductance values, Li=0. Zero inductance value is indicative of the absence of magnetic field within these superconductor specimens, i.e., of belonging the same to the second-kind superconductors [Ginsburg V.L. /Superconductivity: the Day before Yesterday, Yesterday, Today, and Tomorrow. //Advances in Physical Science. 2000, Volume 170, No. 6, pages 619-630]. For silver conductors, the same rule applies to the minimum length providing for detection of at least one zero-resistance specimen in a series: the specimen size providing for manifestation of zero resistance in a statistical is less than 3000 $\mu$m.

The experiments have shown that as the conductor scale is reduced, enormous experimental spread in resistance values is observed varying from zero value to the normal value of $1.55 \cdot 10^{-8}$ $\Omega$-m and higher. The enormous experimental spread is caused by the presence in the series of conductors both of superconducting specimens (specimens with superconducting cluster zones) and non-superconducting conductors with various resistance values associated with various types of defects present in the material structure. [Tsoi B., Kartashov E.M. and Shevelev V.V., THE STATISTICAL NATURE AND LIFETIME IN POLYMERS AND FIBERS. Utrecht-Boston. Brill Academic Publishers/VSP, 2004, 522 pages; Kartashov E.M., Tsoi B., Shevelev V.V., The Structural and Statistical Kinetics of Polymer Destruction. Moscow, Khimia Publishers, 2002, 736 pages]. Defects may comprise structural discontinuities, crystal lattice imperfections, impurities, inclusions, microdiscontinuities, dislocations, etc. The full range of structural defects (major and minor) influencing conductor's physical, in particular electrical characteristics is present in massive conductor specimens, and the presence of superconducting zones does not affect its conduction because they are separated and not linked into a single electric circuit and are thus masked and not revealed. Accordingly, substantially no experimental spread in resistance values is observed in massive conductors. No gross structural defects influencing conduction are present in the small-sized conductors (they cannot be present due to a large size of defects, for example, exceeding the specimen size), and the full range of small structural defects influencing conduction is revealed, including also the superconducting zones, so that considerable resistance spread is observed. The less is the conductor size, the greater will be the experimental resistance spread (see "Experimental Evidence" section). Therefore, both arbitrarily low and arbitrarily high resistance values corresponding to conventional reference data will be observed in the series of short-length conductors. Hence, ultralow resistance values are associated both with the presence of superconducting zones in the material and the experimental spread caused by scaling and statistical, thermofluctuational and relaxational nature of the experimental data spread. [Tsoi B., About Three Scientific Discoveries Associated with the Discreteness Phenomenon, Moscow, Mir-Khimia Publishers, 2004, 208 pages]. Since in our experiments with copper and silver wire, zero resistance was observed in a series of conductors with the specimen length less than 4000 $\mu$m, these values do correspond to the lateral dimensions of superconducting zones (or clusters) many times revealed by the researchers in the past century [Ginsburg V.L. /Superconductivity: the Day before Yesterday, Yesterday, Today, and Tomorrow. //Advances in Physical Science. 2000, Volume 170, No. 6, pages 619-630] and statistically revealed and measured by the present inventors.

Now that the lateral dimension of the superconducting oxide zone is known, for example, for cuprates, as being less than 4 mm, one may without fail produce the superconducting material. To this effect, a series of at least 100 separate and identical conductors with a thin oxide layer (formed either naturally due to interaction between the conductor surface with atmospheric oxygen or artificially using oxidizing by any known technique, for example, annealing) should be taken and combined into a multiple-element bunch or multilayer stack, i.e., a parallel electric circuit of N>100 constituent elements or layers with two opposing current electrode attached thereto.

As used herein, the term "single-type" means identical, produced in a single-type (same) manner, under the same operating conditions, having the same mass, dimensions, form, etc. The term "separate" means isolation and apartness of each specimen element within a statistical sample. By connecting the ends of these elements to the two opposing current electrodes a parallel electric circuit is formed, wherein when an electric potential is applied to said current electrodes the current will flow through the least resistance whose total value in such parallel circuit will be less than that of the least one.

Dealing with statistical distributions having stochastic nature, accidental practical realizations of the zero-resistance superconductor are possible where a stack is sufficient comprising N>1 but less than 100 separate single-type conductor elements comprising oxide or protoxide layers and whose working part length between the two current electrodes is less than 3000-4000 $\mu$m. Of course, the probability of realization of such superconductor will be less than 1.

In order to realize a conductor with the resistance value close to zero (a value, for example, several orders of magnitude lower than conventional reference values) rather than equal to zero, a stack will suffice composed of N>1 but less than 100 separate single-type conductor elements comprising oxide or protoxide layers and whose working part length between the two current electrodes is less than 3000-4000 $\mu$m.

The following definitions are further given herein to enable unique interpretation of the technical effects. According to the prior art [Tsoi B., Lavrentiev V.V. /Material for Components of Radioelectronic Devices, RU 2 284 267, priority date: 10.11.2004; Tsoi B., Lavrentiev V.V. Kartashov E.M., Shevelev V.V. / Electroinsulating Material, RU 2 284 593, priority date: 26.10.2004; Tsoi B., Kartashov E.M., Shevelev V.V., Tsoi S.B. /Material for Protection against Impact Actions // RU 2005126360, priority date: 22.08.2005], a stack (bunch) should be understood as a multi-element statistical structure formed of N>1 (where N is an integer) separate single-type finite current-conducting elements arranged in parallel to each other (or one above the other) at the surface (edge) and within the volume (or interval) of the same and combined into a bunch, i.e., a parallel electric circuit using the two opposing current contacts or electrodes. Films and fibers may comprise the elements of such statistical sample (i.e., stack or bunch). If a stack (bunch) is composed of N films, such statistical sample has a plane-parallel arrangement of films having superficial (edge) and intermediate (intra-volume) elements. However, if a stack (bunch) is formed by combining N fibers, such statistical structure will preferably have a linear-parallel arrangement of fiber elements at the surface (edge) and/or within the volume (interval) of the same.

Changing of the scale according to the present invention allows lateral dimension to be determined for the specimens of non-superconducting conductors, and the principle of apartness of conductor specimens ensures parallelism of the electric circuit of N separated isolated conductors between the two current electrodes to which the same are attached, with at least one superconducting zone (of the specimen length size) being included in the current circuit. The principle of the uniformity of type of specimens should be observed for proper creation of a statistical sample in the form of variational series and for detection therein of a specimen with a superconducting zone (cluster).

In order to obtain without fail the superconducting material, a stack of at least 100 specimens should be formed, and to enhance the superconducting effect, linear dimensions (thickness and length) should be reduced and the number of separate single-type conductor layers should also be increased to a sufficiently large number. Reducing of the specimen length to zero will lead to the resistance drop to zero. If the conductor size is reduced to critical values comparable to the electric charge free-path length, enormous experimental spread in the resistance values will be observed.

The probability of detecting a zero-resistance specimen in such statistical sample will be very high even with no SCZs present in the specimens. Particularly, the probability will increase as the specimen length is reduced to the size equal to the average free-path length of charges, which is associated both with the presence and the absence of the superconducting oxide zone, but first of all with the presence of scaling and statistical, thermofluctuational and relaxational spread in the resistance values varying from zero value to the conventional ones and the arbitrarily high one in such small-sized conductors [Tsoi B., Kartashov E.M. and Shevelev V.V., THE STATISTICAL NATURE AND LIFETIME IN POLYMERS AND FIBERS, Utrecht-Boston, Brill Academic Publishers/VSP, 2004, 522 pages; Kartashov E.M., Tsoi B., Shevelev V.V., The Structural and Statistical Kinetics of Polymer Destruction, Moscow, Khimia Publishers, 2002, 736 pages; Tsoi B., About Three Scientific Discoveries Associated with the Discreteness Phenomenon, Moscow, Mir-Khimia Publishers, 2004, 208 pages]. Therefore, if the conductor specimen length in the statistical sample is reduced, for example, from 10 N>100 to sufficiently small values, the probability of detecting a zero-resistance specimen will be rather high, and even if rather than zero-resistance specimens only specimens with the resistance close to zero are found in the sample, the total resistance in such parallel circuit will be equal or close to zero. On the other hand, with an increase in N number of elements, the probability of detecting a conductor with a superconducting cluster in this statistical sample rises, and a rather large number of N small-sized conductors (for instance, with a thickness equal to atomic or monomolecular size) helps to ensure and increase the probability of obtaining a superconductor. For example, N may be equal to 100, 1000, 10,000, 100,000, 1,000000, 10,000,000, etc. In this case, the probability of obtaining a superconducting conductor will be very close or equal to 1, i.e., the conduction of such conductor, as N converges to infinitesimal values, will converge to infinitesimal values according to the mathematical law of large numbers.

Therefore, the superconductivity phenomenon in multi-element bunches or multilayer stacks is determined by the fact that when the typical sizes of elements (specimens) are reduced to the sizes typical for lateral dimensions of the material superconducting zones, some of the elements (specimens) will contain superconducting zones and some will not. Then, if all elements are in parallel combined into a multi-element current-conducting conductor (a bunch of wires or a stack in case of film) and its ends are attached to the current electrodes, those element constituents that contain superconducting zones will become directly included in the electric circuit with their superconducting zones and will convert the entire multi-element conductor into a superconducting one. The multi-element (clustered) nature of the structure is obligatory here, since it allows the superconducting zones and the least-resistance zones to be without fail included in said current-conducting system. Adherence to the scaling factor ensuring direct inclusion of the superconducting zones or clusters (conductors) in the electric circuit is also a mandatory requirement. In addition, the scaling factor provides for a wide experimental data spread, i.e., availability in the series of both zero-resistance specimens and those with an arbitrarily high one.

Therefore, in order to realize without fail the superconductivity effect, the length of a wire conductor, for example, of copper or silver, should be in general not less than 4 mm and the number of conductors N>100. However, due to stochasticity there are cases wherein the superconductor could be realized with N<100.

In practice, in order to ensure that a superconductor or conductor with ultralow resistance and superhigh decrease in the resistance spread of N conductors (ignoring the thickness of current-conducting films and fibers) is implemented without fail, two simple mathematical relationships have been proposed by the inventors.

Relationship 1 considers the presence of at least one specimen with SCZs in the statistical sample, while relationship 2 - the absence of at least one superconducting element in the sample:

1) in the presence of elements having SCZs:

$$N \geq 1n(1-P_0)/1n(1-P) \tag{1},$$

where P is an experimentally determined portion of superconducting elements in their sample of a number of elements prepared for the production a multi-element current-conducting structure;
$P_0$ is a confidence probability of the presence of at least one conductor with SCZs in the multi-element current-conducting structure;

2) in the absence of conductors with SCZs:

$$N \geq R_0/P \cdot R_3 \tag{2},$$

where P is an experimentally determined portion of conductors with R≤Ro;
$R_0$ is a lower resistance limit of the specimens whose portion is equal to P;
$R_3$ is a required or predetermined stack resistance.

While the dimensions of the current-conducting elements are ignored in relationships 1 and 2, they are implicitly defined by these formulas in terms of resistance.

For various type of conductor materials of which a stack or a bunch is to be composed, various linear dimensions of the constituent elements are available, and in any case, the smaller is the conductor liner dimension and the greater is N, the better will be manifested the conductor superconductivity effect. At the same time, it has been found that the bunched conductor produced in the above manner will have no experimental spread. And so, multilayer (or bunched conductors) will have stable high-accuracy values without experimental spread in the resistance value or other physical characteristics.

Similar results, i.e. lowering of electrical resistance are obtained not only by rescaling the conductor specimens but also by varying the current frequency or increasing the current strength or voltage applied to the specimen. In particular, as the current frequency increases, the resistance drastically drops due to the electrical current flow over the surface of the conductor used in the art for power transportation and transmission. If the load - current strength and voltage - increases (with the value of temperature, scale and frequency being constant), the electrical resistance of the material will also drastically drop to zero, i.e., the conductor becomes superconducting. However, no field of application for this superconductivity effect can be practically found at present due to its high cost.

It is the inventor's opinion that the most expedient is the superconductivity effect and the resistance drop effect based on the above described structural and statistical scaling factor as it does not require tremendous expenditure of energy.

Brief description of the drawings

The invention will be further explained in more detail by way of particular preferred examples of its embodiments with reference to the attached drawing wherein:

Fig. 1    shows cumulative distribution curves of the electrical resistance values for copper conductors of various lengths (N=1; length: 3 mm, 30 mm, 110 mm, 200 mm) and 120 $\mu$m in thickness;

Fig. 2    shows cumulative distribution curves of the electrical resistance values for bunched copper conductors whose number in the bunch is N=1, 4, 8 and 100 (i.e., each point of the curve represents the measurement of the bunch or stack of 1, 4 and 8 specimens); specimen length - 3 mm; thickness - 120 $\mu$m;

Fig. 3    shows cumulative distribution curves of the electrical resistance values for bunched copper conductors whose number is N=1, 4, 8 and 100; specimen length - 3 mm; thickness - 75 $\mu$m;

Fig. 4    shows the influence of N number of elements and frequency f on the cumulative curves of resistance for a bunched copper conductor of 3 mm in length and 120 $\mu$m in thickness.

Preferred embodiment of the invention

The experimental statistical measurements of electrical resistance for copper and silver conductors are provided in Tables 1-3 below.

Table 1 shows the characteristics of experimental spread in the electrical resistance measurement data for specimens of the copper wire of 120 $\mu$m in thickness and of different lengths.

Table 1.

| Conductor length, l, mm | Initial $R_H$ and final $R_K$ distribution function value, $R_H$, $R_K$, Ohm | Distribution function deviation range, $R_V = R_K - R_H$ | Experimental spread in resistance values, $R_V = R_K$ x 100, % |
|---|---|---|---|
| 3 | 0.000000; 0.201000 | 0.20100 | $\infty$ |
| 30 | 0.049000; 0.149600 | 0.10060 | 205 |
| 110 | 0.167200; 0.194700 | 0.02750 | 2.75 |
| 200 | 0.311300; 0.325600 | 0.01430 | 1.43 |

As seen from Table 1, there is practically no spread in massive (long) specimens of 200 mm in length: it amounts only to 1.43 % and the resistance value is from 0.311300 to 0,325600 Ohm. If the copper conductor length is reduced to 30 mm, the spread increases to 205% and the resistance value amounts to 0.049000-0.149600 Ohm, i.e., not at all a "copper value" which is at variance with reference data [Tsoi B., About Three Scientific Discoveries Associated with the Discreteness Phenomenon, Moscow, Mir-Khimia Publishers, 2004, 208 pages].

In Table 2 below, distribution of the electrical resistance R and inductance $L_l$ values for the copper wire of 120 $\mu$m in thickness and 3 mm in length is shown in numerical order n.

Table 2

| Specimen No., n | R, Ohm | $L_i$, mH | Specimen No., n | R, Ohm | $L_i$, mH |
|---|---|---|---|---|---|
| 1 | 2 | 3 | 1 | 2 | 3 |
| 1 | 0.00000 | 0.00000 | 51 | 0.00320 | 0.00007 |
| 2 | 0.00000 | 0.00000 | 52 | 0.00330 | 0.00007 |
| 3 | 0.00010 | 0.00001 | 53 | 0.00330 | 0.00007 |
| 4 | 0.00020 | 0.00001 | 54 | 0.00330 | 0.00007 |
| 5 | 0.00030 | 0.00001 | 55 | 0.00330 | 0.00007 |
| 6 | 0.00040 | 0.00001 | 56 | 0.00340 | 0.00007 |
| 7 | 0.00050 | 0.00001 | 57 | 0.00340 | 0.00007 |
| 8 | 0.00070 | 0.00001 | 58 | 0.00340 | 0.00007 |
| 9 | 0.00080 | 0.00001 | 59 | 0.00360 | 0.00007 |
| 10 | 0.00080 | 0.00001 | 60 | 0.00360 | 0.00007 |
| 11 | 0.00090 | 0.00001 | 61 | 0.00360 | 0.00007 |
| 12 | 0.00090 | 0.00002 | 62 | 0.00370 | 0.00007 |
| 13 | 0.00100 | 0.00002 | 63 | 0.00380 | 0.00007 |
| 14 | 0.00100 | 0.00002 | 64 | 0.00380 | 0.00007 |
| 15 | 0.00100 | 0.00002 | 65 | 0.00390 | 0.00007 |
| 16 | 0.00110 | 0.00002 | 66 | 0.00390 | 0.00007 |
| 17 | 0.00110 | 0.00003 | 67 | 0.00410 | 0.00007 |

(continued)

| Specimen No., n | R, Ohm | $L_i$, mH | Specimen No., n | R, Ohm | $L_i$, mH |
|---|---|---|---|---|---|
| 1 | 2 | 3 | 1 | 2 | 3 |
| 18 | 0.00120 | 0.00003 | 68 | 0.00420 | 0.00007 |
| 19 | 0.00120 | 0.00004 | 69 | 0.00430 | 0.00007 |
| 20 | 0.00130 | 0.00004 | 70 | 0.00440 | 0.00007 |
| 21 | 0.00130 | 0.00004 | 71 | 0.00460 | 0.00007 |
| 22 | 0.00130 | 0.00004 | 72 | 0.00600 | 0.00007 |
| 23 | 0.00140 | 0.00004 | 73 | 0.00610 | 0.00007 |
| 24 | 0.00140 | 0.00004 | 74 | 0.00690 | 0.00007 |
| 25 | 0.00150 | 0.00004 | 75 | 0.00700 | 0.00007 |
| 26 | 0.00170 | 0.00004 | 76 | 0.00730 | 0.00007 |
| 27 | 0.00170 | 0.00004 | 77 | 0.00780 | 0.00007 |
| 28 | 0.00190 | 0.00004 | 78 | 0.00780 | 0.00007 |
| 29 | 0.00190 | 0.00004 | 79 | 0.00800 | 0.00008 |
| 30 | 0.00220 | 0.00004 | 80 | 0.00890 | 0.00008 |
| 31 | 0.00220 | 0.00004 | 81 | 0.00970 | 0.00008 |
| 32 | 0.00220 | 0.00004 | 82 | 0.01030 | 0.00008 |
| 33 | 0.00230 | 0.00004 | 83 | 0.01120 | 0.00008 |
| 34 | 0.00240 | 0.00005 | 84 | 0.01330 | 0.00008 |
| 35 | 0.00240 | 0.00005 | 85 | 0.01420 | 0.00008 |
| 36 | 0.00250 | 0.00005 | 86 | 0.01450 | 0.00008 |
| 37 | 0.00250 | 0.00005 | 87 | 0.01800 | 0.00008 |
| 38 | 0.00260 | 0.00005 | 88 | 0.01880 | 0.00008 |
| 39 | 0.00260 | 0.00006 | 89 | 0.02090 | 0.00008 |
| 40 | 0.00260 | 0.00006 | 90 | 0.02340 | 0.00008 |
| 41 | 0.00260 | 0.00006 | 91 | 0.02410 | 0.00008 |
| 42 | 0.00270 | 0.00006 | 92 | 0.03390 | 0.00008 |
| 43 | 0.00280 | 0.00006 | 93 | 0.03860 | 0.00008 |
| 44 | 0.00290 | 0.00006 | 94 | 0.04680 | 0.00009 |
| 45 | 0.00290 | 0.00006 | 95 | 0.05470 | 0.00009 |
| 46 | 0.00290 | 0.00007 | 96 | 0.05560 | 0.00010 |
| 47 | 0.00300 | 0.00007 | 97 | 0.10550 | 0.00010 |
| 48 | 0.00300 | 0.00007 | 98 | 0.11830 | 0.00010 |
| 49 | 0.00300 | 0.00007 | 99 | 0.12120 | 0.00212 |
| 50 | 0.00320 | 0.00007 | 100 | 0.20100 | 0.00538 |

In Table 3, distribution of the electrical resistance R and inductance $L_l$ values for the silver wire of 100 $\mu$m in thickness and 3 mm in length is shown in numerical order n.

Table 3

| Specimen No., n | R, Ohm | $L_i$, mH | Specimen No., n | R, Ohm | $L_l$, mH |
|---|---|---|---|---|---|
| 1 | | 2 3 | 1 | 2 | 3 |
| 1 | 0.00000 | 0.00000 | 56 | 0.01082 | 0.00006 |
| 2 | 0.00031 | 0.00001 | 57 | 0.01082 | 0.00006 |
| 3 | 0.00164 | 0.00002 | 58 | 0.01083 | 0.00006 |
| 4 | 0.00181 | 0.00003 | 59 | 0.01083 | 0.00006 |
| 5 | 0.00993 | 0.00004 | 60 | 0.01086 | 0.00006 |
| 6 | 0.00993 | 0.00004 | 61 | 0.01087 | 0.00006 |
| 7 | 0.00996 | 0.00004 | 62 | 0.01089 | 0.00006 |
| 8 | 0.00998 | 0.00004 | 63 | 0.01089 | 0.00006 |
| 9 | 0.00998 | 0.00005 | 64 | 0.01093 | 0.00006 |
| 10 | 0.00998 | 0.00005 | 65 | 0.01095 | 0.00006 |
| 11 | 0.00999 | 0.00005 | 66 | 0.01096 | 0.00006 |
| 12 | 0.01 | 0.00005 | 67 | 0.01101 | 0.00006 |
| 13 | 0.01 | 0.00005 | 68 | 0.01102 | 0.00006 |
| 14 | 0.01002 | 0.00005 | 69 | 0.01102 | 0.00006 |
| 15 | 0.01004 | 0.00005 | 70 | 0.01106 | 0.00006 |
| 16 | 0.01004 | 0.00005 | 71 | 0.01113 | 0.00006 |
| 17 | 0.01005 | 0.00005 | 72 | 0.01113 | 0.00006 |
| 18 | 0.01011 | 0.00005 | 73 | 0.01116 | 0.00006 |
| 19 | 0.01021 | 0.00005 | 74 | 0.01118 | 0.00006 |
| 20 | 0.01021 | 0.00005 | 75 | 0.01128 | 0.00006 |
| 21 | 0.01021 | 0.00005 | 76 | 0.0113 | 0.00006 |
| 22 | 0.01023 | 0.00005 | 77 | 0.01132 | 0.00006 |
| 23 | 0.01025 | 0.00005 | 78 | 0.01134 | 0.00006 |
| 24 | 0.01031 | 0.00005 | 79 | 0.01137 | 0.00006 |
| 25 | 0.01033 | 0.00005 | 80 | 0.01138 | 0.00006 |
| 26 | 0.01035 | 0.00005 | 81 | 0.0114 | 0.00006 |
| 27 | 0.01036 | 0.00005 | 82 | 0.01142 | 0.00006 |
| 28 | 0.01037 | 0.00005 | 83 | 0.01146 | 0.00006 |
| 29 | 0.01042 | 0.00005 | 84 | 0.01146 | 0.00006 |
| 30 | 0.01043 | 0.00005 | 85 | 0.01147 | 0.00006 |
| 31 | 0.00933 | 0.00005 | 86 | 0.01153 | 0.00006 |
| 32 | 0.00951 | 0.00005 | 87 | 0.01161 | 0.00006 |
| 33 | 0.00964 | 0.00005 | 88 | 0.01161 | 0.00006 |
| 34 | 0.00981 | 0.00005 | 89 | 0.01163 | 0.00006 |
| 35 | 0.00993 | 0.00005 | 90 | 0.01168 | 0.00006 |
| 36 | 0.01043 | 0.00005 | 91 | 0.0117 | 0.00006 |
| 37 | 0.01049 | 0.00005 | 92 | 0.01175 | 0.00006 |

(continued)

| Specimen No., n | R, Ohm | $L_i$, mH | Specimen No., n | R, Ohm | $L_l$, mH |
|---|---|---|---|---|---|
| 1 | | 2 3 | 1 | 2 | 3 |
| 38 | 0.01049 | 0.00005 | 93 | 0.01187 | 0.00006 |
| 39 | 0.0105 | 0.00005 | 94 | 0.01192 | 0.00006 |
| 40 | 0.01053 | 0.00005 | 95 | 0.01198 | 0.00006 |
| 41 | 0.01054 | 0.00005 | 96 | 0.01201 | 0.00006 |
| 42 | 0.01054 | 0.00006 | 97 | 0.01201 | 0.00006 |
| 43 | 0.01056 | 0.00006 | 98 | 0.01206 | 0.00007 |
| 44 | 0.01057 | 0.00006 | 99 | 0.01217 | 0.00007 |
| 45 | 0.0106 | 0.00006 | 100 | 0.01227 | 0.00007 |
| 46 | 0.01064 | 0.00006 | 101 | 0.01242 | 0.00007 |
| 47 | 0.01064 | 0.00006 | 102 | 0.01252 | 0.00007 |
| 48 | 0.01067 | 0.00006 | 103 | 0.01264 | 0.00007 |
| 49 | 0.01067 | 0.00006 | 104 | 0.01274 | 0.00007 |
| 50 | 0.01068 | 0.00006 | 105 | 0.01721 | 0.00007 |
| 51 | 0.01069 | 0.00006 | | | |
| 52 | 0.01076 | 0.00006 | | | |
| 53 | 0.01077 | 0.00006 | | | |
| 54 | 0.0108 | 0.00006 | | | |
| 55 | 0.01082 | 0.00006 | | | |

It can be seen from Tables 2, 3 that with further reduction of the conductor length to 3 mm, the spread in the resistance values increases infinitely, while the resistance drastically drops to zero. Measurements of the inductance L have shown similar behavior of the spread in its values. As the resistance drops to zero, the inductance also drops to zero, i.e., no magnetic field is present within such conductor.

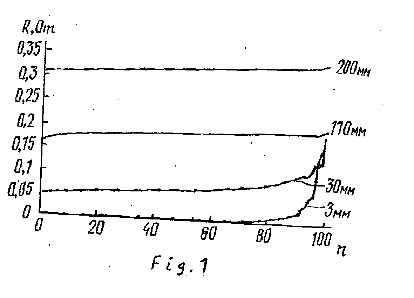

Fig. 1 shows variational diagrams or cumulative distribution curves of electrical resistance for copper conductors of different lengths. It can be seen from this data that at least one of 100 tested specimens of the copper and silver wire has a zero-resistance value. As can be seen from the Tables, zero-resistance values are matched by zero-inductance values, which is indicative of the absence of the magnetic field within such conductora. In addition, a number of specimens whose working part is of 3 mm in length have the values sufficiently close to zero. No zero values or values close to zero are observed for long lengths (the spread being insignificant, see also Tables 1 and 2).

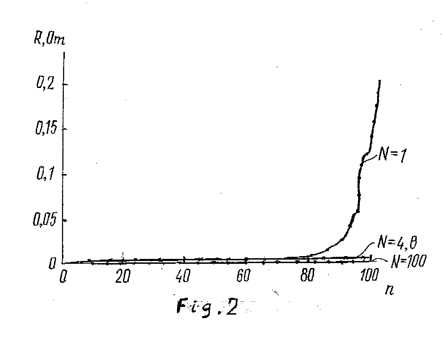

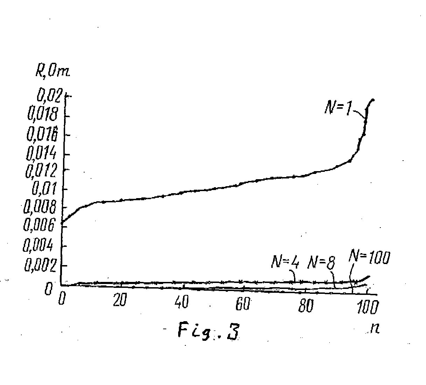

If now the specimens whose length corresponds to 3 mm (see Fig.1) are bunched, stacked, i.e., formed into a parallel circuit of N=4, 8 and 100 specimens (Fig. 2) and the opposing current electrodes are attached thereto, the total resistance of such multilayer conductors will drastically drop. If such bunch consists of 4 or 8 specimens, there will be a small number of zero-resistance specimens in the series of tested specimens. At the same time, despite a drastic drop of the total resistance, it however has not reached the zero value. That is, not all the conductors of a given statistical sample of bunches consisting of N=4 and 8 conductors would reach superconductivity. If each bunch is composed of 100 specimens, all bunches will without fail have zero resistances (fig.2). Similar data have been obtained for conductors having the length of 3 mm and the thickness of 75 $\mu$m (see Fig. 3).

As shown by the measurements of current voltage characteristics, the thus produced bunched conductors are able to withstand considerable current loads. While according to reference data conventional copper only withstands the current of 5 A/mm, the inventive bunch of four 120-micron copper wires withstands over 1000 A/mm.

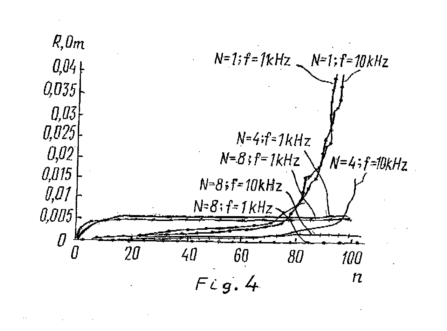

The research of influence of the acting current frequency at which the electric current resistance is measured has proved the principle of temperature-time, scale and power equivalency (TTE) discovered by the present inventors. Thus, it can be seen in Fig. 4 that with an increase in the frequency f the resistance of copper conductors drastically drops. Especially, the effect of resistance dropping to zero is clearly observed along with a simultaneous increase in the number of elements in the N bunch and under the influence of the frequency f.

EXAMPLE 1

A conductor for current-conducting circuits, contact pads, electrodes and current-conducting buses in the electronic circuitry

A substrate (for example, electronic board, silicon monocrystal blank and the like) is provided to which a current-conducting circuit or a contact pad, an electrode, a current-conducting bus and the like has to be applied.

Copper is applied to the substrate by masking technique or any other method, for example, a film-based current-conducting circuit or a contact pad with any selected configuration such as in the form of thin stripes (combs) or grids whose effective length corresponds to (or is less than) the SCZ lateral dimension is applied by diffusion sputtering or thermal evaporation. Since the SCZ lateral dimension for copper is 3 mm, the SPZ size should be predetermined for other chemical elements, for example, aluminium according to the above statistical technique. The thickness of each copper monolayer should be for example of 400 nm. Other thickness values are also possible. All monolayers should be identical, i.e., belong to a single type. Therefore, when copper is used the length of an elementary conductor working part does not exceed 3 mm (i.e., the lateral dimension of a superconducting zone or cluster). Each copper layer of the film is oxidized by any known method, for example, by electrothermal annealing.

Meanwhile, a thin oxide layer of $CuO$, $Cu_2O$ or $CuO_2$ which in turn forms a SCZ is created on the copper wire. On top of the oxide film, a second copper layer is applied which is also oxidized. This cycle is repeated N times (in case of the superconducting circuit the cycle is repeated N>100 times, if the circuit is just a low-resistance circuit rather than a superconducting one, the cycle is repeated N<100). As a result, a multilayer stack (or a bunch) is formed with a thin oxide interlayer. The resistance R of such multilayer bunch is defined and calculated using formula 1 or 2 depending on the purpose of the superconducting circuit. The multilayer copper conductor described above has limited linear dimensions (not exceeding the SCZ lateral dimension, i.e., 3 mm). In order to increase the extension of the thus produced conductor, a number of identical multilayer (bunched) elementary links are added thereto by the same layer-by-layer method until the required size is obtained so that a bunched or multilayer (of N layers) long-length chain-type conductor of Z elementary circuit links is formed. However, a tetragonal (square) configuration of the elementary link is possible rather than a strip-like one. In this case, the conductor linear dimensions are increased by adding an elementary square bunched link to each of the four sides.

In case of a six-sided (hexagonal, honeycomb) configuration of the multilayer elementary conductor link, if the links are added to each of the six polygon sides, a multilayer superconducting material with a honeycomb structure is obtained.

EXAMPLE 2

A long-length conductor

A wire of different length and thickness is provided. The SCZ size is determined by experimentally constructing the distribution functions for different lengths and thicknesses. Let us consider an example with the copper wire.

N>100 copper wires less than 20 $\mu$m in thickness is provided. Each wire is oxidized by thermal annealing of a layer of $CuO$, $Cu_2O$ or $CuO_2$ less than 1 $\mu$m in thickness. Then, a long-length twisted article of N>100 wires coated with the oxide layer is formed with a linear-point contact and a lay pitch equal to the SCZ lateral dimension, i.e., equal to 3 mm for copper. The resistance R of such long-length conductor is defined and controlled by relationship (1) and (2) based on the N number of the bunch constituent elements.

EXAMPLE 3

Superconducting p-n junctions in semiconductor devices

A semiconductor substrate with n- or p-type conductivity is provided. N number of p-n junctions with adjacent diffusion regions is formed on the substrate depending on the purpose of the device. The geometry of junctions is reduced to an infinitesimal value (in other words, point-contact junctions are obtained) and the N number of N p-n junctions is increased to infinitesimal values. Then, the N number of p-n junctions within semiconductor device internal structure is combined into a parallel circuit using superconducting electrodes or bus to form a current unit.

The internal resistance of p-n junctions in such bunched semiconductor devices is equal or tends to zero.

In conclusion, it should be noted that the above examples have been provided only to enable a better understanding of the essence of invention as well as its advantages and by no means embrace all possible particular embodiments thereof.

Industrial applicability

The present invention will find application in the production of polymeric conductors as well as in various current-conducting circuits for electric diagrams, power transmission cables, oscillating circuits, inductance coils, windings for motors, transformers, generators.

**Claims**

1.  A method for the production of an electric conductor, said method comprising performing M series of measurements of the electrical resistance of the current-conducting elements, wherein M is a natural number, said current-conducting elements in each i-nth series (i=I..M) belong to a single type and their number is equal to $N_i$, taking the j-nth sample of Nj single-type elements based on the measurement results, wherein said sample is defined by the least resistance value among all elements tested, and then connecting in parallel R>Nj of the current-conducting elements each having a length of $L<l_j$ where $l_j$ is a length of the elements in the j-nth sample.

2.  The method according to Claim 1,
    **characterized in that** the current-conducting elements comprise films of a current-conducting material.

3.  The method according to Claim 1,
    **characterized in that** the current-conducting elements comprise current conducting fibers.

4.  The method according to Claims 1-3,
    **characterized in that** the value of Ni for any i= 1..M is not less than 100.

5.  An electric conductor comprising R single-type current-conducting elements of the length L connected in parallel, wherein R>Nj and Nj is the number of elements in the j-nth sample taken based on the results of performing M series of measurements of the electrical resistance of the current-conducting elements, M is a natural number, said current-conducting elements in each i-nth series (i=I..M) belong to a single type, said j-nth series is taken based on the presence therein of a current-conducting element with the least resistance, and $L<l_j$, where $l_j$ is the length of the elements in the j-nth sample.

6.  The conductor according to Claim 5,
    **characterized in that** the current-conducting elements comprise films of a current-conducting material.

7.  The conductor according to Claim 5,
    **characterized in that** the current-conducting elements comprise current conducting fibers.

8.  The conductor according to any of Claims 5-7,
    **characterized in that** the value of Ni for any i=1..M is not less than 100.

Fig. 1

Fig. 2

Fig. 3

Fig. 4

## INTERNATIONAL SEARCH REPORT

| | International application No. |
| --- | --- |
| | PCT/RU 2008/000431 |

A.    CLASSIFICATION OF SUBJECT MATTER

*H01B 12/06  (2006.01)*

According to International Patent Classification (IPC) or to both national classification and IPC

B.    FIELDS SEARCHED

Minimum documentation searched (classification system followed by classification symbols)

Documentation searched other than minimum documentation to the extent that such documents are included in the fields searched

H01B 12/00-12/16, H01L 39/24, C23C 14/54

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
| --- | --- | --- |
| A | RU 2131157 C1 (ZHAK LEVINER et al.) 27.05.1999 | 1-8 |
| A | JP 2056976 A (MITSUBISHI MINING & CEMENT CO) 26.02.1990, the abstract | 1-8 |
| A | JP 2258977 A (CANON KK) 19.10.1990, the abstract | 1-8 |

| ☐    Further documents are listed in the continuation of Box C. | ☐    See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15 October 2008 (15.10.2008) | 23 October 2008 (23.10.2008) |
| Name and mailing address of the ISA/ | Authorized officer |
| Facsimile No. | Telephone No. |

Form PCT/ISA/210 (second sheet) (July 1998)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- RU 2284267
- RU 2284593

- RU 2005126360

### Non-patent literature cited in the description

- **Ginsburg V.L.** Superconductivity: the Day before Yesterday, Yesterday, Today, and Tomorrow. *Advances in Physical Science,* 2000, vol. 170 (6), 619-630
- Interaction between High-Power Pulsed Laser Radiation and the Surface of Ceramic YBCO Target. **Yugai K.N.** Encyclopedia of Koreans of Russia. Russian Academy of Sciences, 2003, 535-541
- **Azzoni C.B. ; Paravicini G.B. ; Samoggia G et al.** Electrical Instability in CuO1-x: Possible Correlations with the CuO-based High Temperature Superconductors. *Z. Naturforsch.,* 1990, vol. 45a, 790-794
- **Schonberger R. ; Otto H.H. ; Brunner B. ; Renk K.F.** Evidence for Filamentary Superconductivity up to 220 K in Oriented Multiphase Y-Ba-CuO Films. *Phisica C,* 1991, vol. 173, 159-162

- **Ossipov V.V. ; Samokhvalov A.A.** Giant Electroconductivity Anomalies at CuO-Cu Interface. *Physics of Metals and Metal Science,* 2000, vol. 89 (5), 43-46
- Comprehensive Polytechnical Encyclopedic Dictionary. Bolshaya Rossiyskaya Entsiklopedia Publishers, 1998, 204-205
- **Azzoni CB. ; Paravicini G.B. ; Samoggia G et al.** Electrical Instability in CuOI-x: Possible Correlations with the CuO-based High Temperature Superconductors. *Z. Naturforsch.,* 1990, vol. 45a, 790-794
- **Tsoi B. ; Kartashov E.M. ; Shevelev V.V.** THE STATISTICAL NATURE AND LIFETIME IN POLYMERS AND FIBERS. Brill Academic Publishers/VSP, 2004, 522
- **Kartashov E.M. ; Tsoi B. ; Shevelev V.V.** The Structural and Statistical Kinetics of Polymer Destruction. Khimia Publishers, 2002, 736